# EUROPÄISCHE PATENTSCHRIFT

(11) **EP 0 800 030 B1**
(45) Veröffentlichungstag und Bekanntmachung des Hinweises auf die Patenterteilung: **21.04.1999**
(21) Anmeldenummer: 96119926.2
(22) Anmeldetag: 12.12.1996
(51) Int. Cl.: F16K 1/22, F16K 47/00, F24F 13/14, B60H 1/00

(54) **Klappe für einen Luftführungskanal**
Valve for an air flow channel
Volet pour un canal de conduit d'air

(30) Priorität: 06.04.1996 DE 19613875
(43) Veröffentlichungstag der Anmeldung: 08.10.1997
(73) Patentinhaber: Behr GmbH & Co., 70469 Stuttgart (DE)
(72) Erfinder: Eilemann, Andreas, Dr., 70825 Korntal-Münchingen (DE)
(74) Vertreter: Heumann, Christian

(56) Entgegenhaltungen:
- DE-A- 3 227 458

## Beschreibung

Die Erfindung betrifft eine Klappe für einen Luftführungskanal, insbesondere für eine Heizungs- und/oder Klimaanlage eines Kraftfahrzeugs nach dem Oberbegriff des Patentanspruchs 1.

Aus der **DE 32 27 458 A1** ist eine oberbegriffsmäßige Klappe zum Steuern der Luftführungsströmung in einem Luftführungskanal für eine Heizungs- und/oder Klimaanlage eines Kraftfahrzeugs bekannt, die aus zwei in gegenseitiger Anlage gehaltenen Klappenteilen gebildet ist. Die beiden Klappenteile sind aus einem dünnen Leichtmetall geformt, wobei ihre ebenen Flächen flächig aneinanderliegen. Randseitig ist die Klappe mit einer umlaufenden Dichtung aus einem elastischen Werkstoff versehen.

Aus der Patentanmeldung P 195 13 670.5 der Anmelderin ist eine Klappe für einen Luftführungskanal bekannt, die als ein Hohlkörper ausgebildet ist. Dadurch läßt sich eine individuelle Anpassung der Formgebung der Klappe an die aerodynamischen Erfordernisse erzielen, wobei innerhalb des Hohlkörpers angeordnete Verstärkungsrippen eine ausreichende Festigkeit bewirken.

Aus dem Taschenbuch der technischen Akustik, herausgegeben von M. Heckel, H.A. Müller, Springer-Verlag, Berlin, 1994, 2. Auflage, Seite 472 ff. sind Resonanzabsorber zur Schalldämpfung in der Bautechnik bekannt. Diese Resonanzabsorber können Resonanzsysteme vom Typ Masse-Feder nach Art eines Helmholtz-Resonators darstellen. Dieser Resonator besteht aus einem Hohlkörper mit Öffnungen, wobei die Luft im Bereich der Öffnungen als Schwingungsmasse und das in dem Hohlkörper befindliche Luftvolumen als Feder wirken. Der als Helmholtz-Resonator ausgebildete Resonanzabsorber kann in einer Schallwand montiert sein, wobei die Schallausbreitung innerhalb der Schallwand eine starke Dämpfung erfährt.

Der Erfindung liegt die Aufgabe zugrunde, eine Klappe für einen Luftführungskanal derart auszubilden, daß eine Schalldämpfung des in dem Luftführungskanal geleiteten Luftstroms bei ausreichender Festigkeit der Klappe gewährleistet ist.

Zur Lösung der Aufgabe weist die Erfindung die Merkmale des Patentanspruchs 1 auf.

Der mit der Erfindung erzielte Vorteil besteht insbesondere darin, daß durch die Ausbildung der Klappe als Hohlkörper und Vorsehen mindestens einer Öffnung an einer Seite desselben ein Helmholtz-Resonator gebildet wird, der den durch den Luftstrom übertragenen Schall im Luftführungskanal dämpft. Die Klappe dient somit zum einen zur Steuerung des Luftstroms und zum anderen zur Dämpfung des sich in dem Luftführungskanals ausbreitenden Schalls. Auf diese Weise kann platzsparend eine Schalldämpfung innerhalb der Heizungs- und/oder Klimaanlage erzielt werden. Da eine solche Anlage in der Regel mehrere Klappen aufweist, kann die Schalldämpfung an mehreren Orten verwirklicht werden, so daß eine mehrfache Dämpfung des Schallgeräusches erfolgen kann.

Nach der Erfindung wird die Öffnung mit einer Dämpfungsschicht aus einem porösen Werkstoff versehen. Dieser dient als Strömungswiderstand und bewirkt eine zusätzliche Dämpfung des Schalls. In einer herstellungstechnisch einfachen Weise wird diese Dämpfungsschicht nach Herstellung der Klappe außenseitig auf das die Öffnungen aufweisende Klappenteil aufgebracht. Vorzugsweise besteht die Dämpfungsschicht aus einem Schmutz und Feuchtigkeit abweisenden Vlies- oder einem Schaumstoffmaterial.

Nach einer Ausgestaltung der Erfindung weist der Hohlkörper Trennwände auf, die den Hohlkörper in luftdicht abgeschlossene Kammern aufteilt. Je nach Volumengröße der Kammern läßt sich auf einfache Weise ein mehr oder weniger breites Frequenzband des Schalls einstellen, innerhalb dessen eine Schalldämpfung erzeugt wird. Auf diese Weise lassen sich störende Luftgeräusche einzelner oder mehrerer Frequenzen verringern.

Nach einer Weiterbildung der Erfindung ist mindestens ein Klappenteil des Hohlkörpers schalenförmig ausgebildet, so daß der Hohlkörper insgesamt strömungsgünstig ausgestaltet ist. Dadurch wird eine nach strömungstechnischen Gesichtspunkten optimierte Klappenform geschaffen, die insbesondere ein Leitflächen- oder Tropfenprofil aufweisen kann.

Nach einer Ausgestaltung der Erfindung weist das dem Luftstrom in Luftströmungsrichtung zugewandte Klappenteil eine Mehrzahl von Öffnungen auf, die gleichmäßig über die Fläche des Klappenteils verteilt sind. Durch Einstellung der Zahl, Größe und Form der Öffnungen wird im Zusammenhang mit dem Volumen des Hohlkörpers der Frequenzbereich festgelegt, in dem die Absorption erzielt werden kann. Vorzugsweise sind die Öffnungen kreisförmig gestaltet, wobei der Radius 3mm beträgt.

In Ausgestaltung der Erfindung weist mindestens ein Klappenteil innenseitig verlaufende Rippen auf, die nach Zusammenbau der Klappenteile zu dem Hohlkörper Trennwände bilden zur Ausgestaltung luftdichter Kammern. Vorzugsweise bestehen die Klappenteile aus einem gespritzten Kunststoffwerkstoff, so daß die Rippen gleichzeitig in einem Arbeitsvorgang bei der Herstellung des Klappenteils ausgeformt werden können.

Nach einer Ausgestaltung der Erfindung ist der aus zwei Klappenteilen bestehende Hohlkörper aus Kunststoff hergestellt, wobei die Klappenteile mittels eines entlang einer Seitenkante der beiden Klappenteile angespritzen Filmscharniers zu einem einstückigen Spritzgußteil miteinander verbunden sind. Die beiden Klappenteile sind um eine Scharnierachse des Filmscharniers zusammenklappbar und mit Hilfe von Fixierelementen in dieser zusammengeklappten Position fixierbar. Durch die Wahl eines Kunststoffmaterials zur Herstellung der beiden Klappenteile und durch die Verbindung der beiden Klappenteile mittels eines Filmscharniers zu einem einstückigen Bauteil ist es möglich, die Klappe in einem einstufigen Spritzgußvorgang mittels einer gemeinsamen Werkzeugsorm für beide Klappenteile herzustellen. Ferner ist es auf einfache Weise möglich, die Klappe nach strömungstechnischen Gesichtspunkten zu konstruieren, die individuell an die jeweiligen Funktionsanforderungen angepaßt sind.

Weitere Vorteile der Erfindung ergeben sich aus den weiteren Unteransprüchen. Ausführungsbeispiele der Erfindung werden nachfolgend anhand einer Zeichnung näher erläutert.

Es zeigen:
- **Fig. 1**: eine perspektivische Darstellung einer erfindungsgemäßen Klappe nach einem ersten Ausführungsbeispiel;
- **Fig. 2**: die Klappe nach Fig. 1 in einer aufgeklappten Position;
- **Fig. 3**: einen Querschnitt durch die Klappe nach Fig. 1 entlang der Schnittlinie A - A, wobei zusätzlich eine Dämpfungsschicht aufgebracht ist und
- **Fig. 4**: eine perspektivische Darstellung eines dritten Ausführungsbeispiels der erfindungsgemäßen Klappe, die mit umlaufenden Dichtstegen versehen ist.

Klappen sind zur Steuerung eines Luftstroms in einem Luftführungskanal in einer Heizungs- und/oder Klimaanlage eines Kraftfahrzeugs vorgesehen. Sie können sowohl zur Steuerung des Luftvolumens innerhalb des Luftführungskanals als auch zur Mischung eines kalten und eines warmen Luftstroms Verwendung finden.

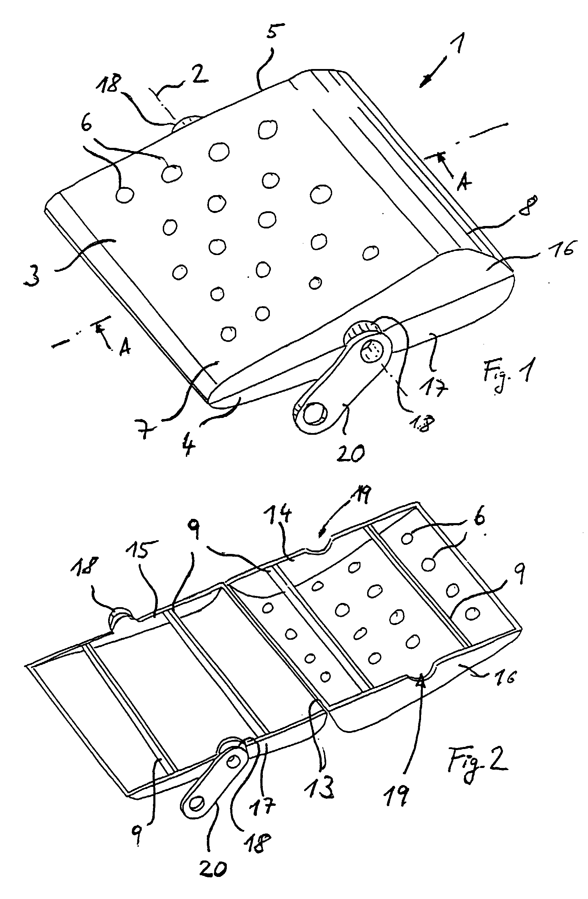

Eine Klappe 1 nach den **Fig. 1 und 2** gemäß einem ersten Ausführungsbeispiel ist in nicht dargestellter Weise in gegenüberliegenden Wandungen eines solchen Luftführungskanals um ihre Schwenkachse 2 schwenkbar gelagert. Die Klappe 1 ist in dem Luftführungskanal zwischen einer den durch den Luftführungskanal geleiteten Luftstrom freigebenden und einer diesen abschließenden Position stufenlos verschwenkbar. Die Klappe 1 ist aus Kunststoff, vorzugsweise aus einem thermoplastischen Kunststoff hergestellt und weist zwei halbschalenförmige Klappenteile 3, 4 auf, die einander zu einem strömungsgünstig geformten Hohlkörper 5 mit einem tropfenartigen Profil ergänzen.

Der Hohlkörper 5 wird gebildet aus dem mit Öffnungen 6 versehenen oberen Klappenteil 3 und dem flächig geschlossenen unteren Klappenteil 4. Das obere Klappenteil 3 besteht aus einem die Öffnungen 6 aufweisenden ebenen Klappenteilsegment 7 und einem sich an diesem anschließend erstreckenden gewölbten Klappenteilsegment 8. Das ebene Klappenteilsegment 7 umfaßt den größten Flächenbereich des oberen Klappenteils 3. Die Klappe 1 ist derart in dem Luftführungskanal angeordnet, daß das obere Klappenteil 3 mit seinem ebenen Klappenteilsegment 7 im wesentlichen dem Luftstrom zugewandt ist. Das Klappenteilsegment 7 würde beispielsweise in einer schließpositionsnahen Lage der Klappe 1 in Strömungsrichtung hinter dem unteren Klappenteil 4 angeordnet sein. Es wird daher in nahezu jeder Position der Klappe 1 ein Zugang des Luftstroms durch die Öffnungen 6 zu dem Hohlkörper 5 gewährleistet. Die Klappe 1 wirkt somit als Helmholtz-Resonator, wobei der sich durch den Luftführungskanal ausbreitende Schall gedämpft wird. Je nach Dimensionierung des Hohlkörpers 5 und der Öffnungen 6 läßt sich eine bestimmte bevorzugte Schallfrequenz absorbieren.

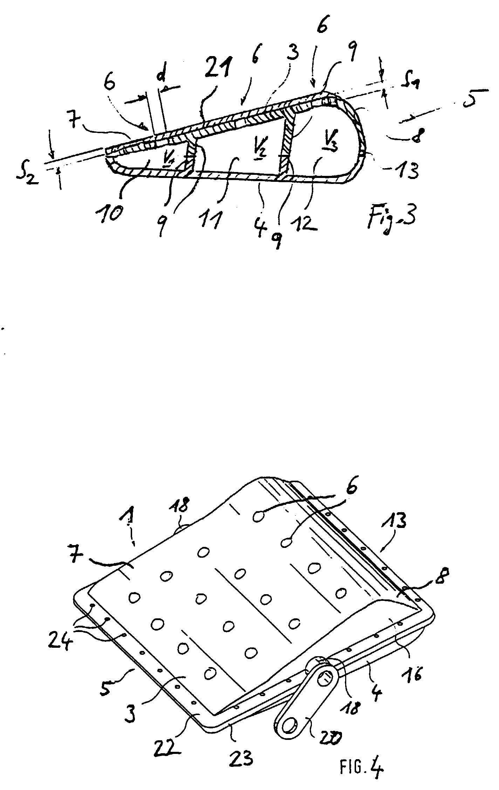

Wie besonders gut aus Fig. 3 ersichtlich ist, weist der Hohlkörper 5 zwei Trennwände 9 auf, die sich parallel zueinander in Richtung der Schwenkachse 2 erstrecken und den Hohlkörper 5 in drei Kammern 10, 11 und 12 unterschiedlichen Volumens V₁, V₂ bzw. V₃ aufteilen. Die erste Kammer 10 bildet ein kleines Volumen V₁, so daß in dieser Kammer 10 eine vergleichsweise höhere Schallfrequenz absorbiert wird. Die zweite Kammer 11, die durch die Trennwände 9 von der ersten Kammer 10 und der dritten Kammer 12 getrennt ist, weist das größte Luftvolumen V₂ auf, so daß eine vergleichsweise niedrige Frequenz absorbiert wird. Die dritte Kammer 12 weist ein mittleres Luftvolumen V₃ auf, so daß die in dieser Kammer 12 absorbierte Frequenz zwischen diesen der in den Kammern 10 und 11 absorbierten liegt. In Abhängigkeit von den Erfordernissen der Schalldämpfung lassen sich auf diese Weise Kammern unterschiedlichen Luftvolumens ausbilden, so daß bei bestimmten vorgegebenen Schallfrequenzen eine Absorption stattfinden kann. Des weiteren läßt sich durch Wahl der Öffnungstiefe, d.h. durch Wahl der Dicke S₂ des ebenen Klappenteilsegments 7, die zu absorbierende Schallfrequenz beeinflussen. Nach den Ausführungsbeispielen gemäß Fig. 1 bis 3 beträgt die Wanddicke S₂ des Klappenteilsegments 7 S₂ = 3mm und der Durchmesser der Öffnung 6 d = 3mm.

Die beiden Klappenteile 3 und 4 sind mittels eines Filmscharniers 13 einstückig miteinander verbunden. Das Filmscharnier 13 erstreckt sich randseitig der Klappenteile 3 und 4 von einer Stirnseite 14 des oberen Klappenteils 13 bzw. einer Stirnseite 15 des unteren Klappenteils 4 zu einer gegenüberliegenden Stirnseite 16 des oberen Klappenteils 3 bzw. einer Stirnseite 17 des unteren Klappenteils 4. Mittels des Filmscharniers 13 sind die Klappenteile 3 und 4 aus einer Werkzeugposition, in der sie sich in einer gemeinsamen Ebene befinden, in eine Schließposition nach **Fig. 1** zusammenklappbar. In der Schließposition liegen die Klappenteile 3 und 4 bündig aufeinander. Auf der dem Filmscharnier 13 gegenüberliegenden Seite der Klappe 1 sind die beiden Klappenteile 3 und 4 mit Fixierelementen in Form einer nicht dargestellten Rastverbindung versehen. Die Rastverbindung weist dabei wenigstens einen Rasthaken an einer der beiden Klappenteile 3 und 4 sowie eine korrespondierende Raststelle an dem gegenüberliegenden Klappenteil 3, 4 auf, die beim Schließen der Klappenteile in der Schließposition der Klappe 1 formschlüssig ineinander rasten. Vorzugsweise ist die Rastverbindung im Bereich der Innenseite der Klappenteile 3 und 4 vorgesehen, so daß sie in der zusammengeklappten Position der Klappe 1 unsichtbar ist und keinen Strömungswiderstand für die Außenkontur der Klappe 1 darstellt.

Wie sich besonders gut aus **Fig. 2** ersehen läßt, erstrecken sich die Trennwände 9 durchgehend von der Stirnseite 14 des oberen Klappenteils 3 bzw. der Stirnseite 15 des unteren Klappenteils 4 hin zu der Stirnseite 16 des oberen Klappenteils 3 bzw. der Stirnseite 17 des unteren Klappenteils 4. Sie schließen jeweils bündig mit den abragenden Kanten der Stirnseiten 14. 15, 16 und 17 ab, so daß in der zusammengeklappten Position der Klappe 1 voneinander unabhängige luftdichte Kammern 10, 11, 12 gebildet werden. Vorteilhafterweise dienen die Trennwände 9 auch als Verstärkungsrippen für die Klappe 1, so daß die Festigkeit der Klappe 1 in Bezug auf Torrosions- und Biegebeanspruchungen erhöht wird. So wie die Trennwände 9 an den Innenseiten der Klappenteile 3 und 4 einstückig an den Innenseiten der Klappenteile 3 und 4 angeformt sind, sind auch zwei Lagerbuchsen 18 einstückig an dem unteren Klappenteil 4 angeformt. Die Lagerbuchsen 18 erstrecken sich jeweils koaxial zu der Schwenkachse 2 im randseitigen Bereich der Stirnseiten 15 und 17. Die Lagerbuchsen 18 bilden jeweils hohe zylindrische Fortsätze, die an den Stirnseiten 15, 17 des Klappenteils 4 angespritzt sind. Damit das Zusammenklappen der beiden Klappenteile 3 und 4 durch die Lagerbuchsen 18 nicht behindert wird, sind an dem oberen Klappenteil 3 auf Höhe der Lagerbuchsen 18 an beiden Stirnseiten 14 und 16 des Klappenteils 3 zwei halbkreisförmige Aussparungen 19 vorgesehen, deren Durchmesser an die Außenkontur der Lagerbuchsen 18 angepaßt ist. In einer der Lagerbuchsen 18 ist ein radial nach außen abragender Stellhebel 20 einstückig angespritzt, der im montierten Zustand der Klappe 1 in an sich bekannter Weise an eine dem Luftführungskanal zugeordnete Steuereinrichtung angeschlossen ist und zur Übertragung der Steuerbewegung der Steuereinrichtung auf eine Schwenkbewegung der Klappe 1 beiträgt. Bei dem dargestellten Ausführungsbeispiel dienen die Lagerbuchsen 18 zur Lagerung der Klappe 1 in gegenüberliegenden Wandungen des Luftführungskanals. Der Stellhebel 20 zur Verschwenkung der Klappe 1 ist bereits außerhalb des Luftführungskanals angeordnet.

Nach einem zweiten Ausführungsbeispiel der Erfindung gemäß **Fig. 3** liegt auf der Außenseite des ebenen Klappenteilsegments 7 eine Dämpfungsschicht 21 an. Die Dämpfungsschicht 21 erstreckt sich vollflächig auf der Oberseite des ebenen Klappenteilsegments 7, wobei sie als Strömungswiderstand für die durch die Öffnung 6 strömende Luft dient. Die Dämpfungsschicht 21 wird aus einem porösen Werkstoff gebildet, wobei die Dicke S₂ der Dämpfungsschicht 21 kleiner ist als der Durchmesser d der Öffnungen 6. Hierdurch läßt sich eine zusätzliche Dämpfung erzielen, wobei je nach Wahl des Werkstoffes und Anzahl der überdeckten Öffnungen 6 der Schall in einem mehr oder weniger breiten Frequenzband gedämpft werden kann. Vorteilhafterweise läßt sich die Dämpfungsschicht 21 nach Herstellung der Klappe 1 auf der Oberseite des ebenen Klappenteilsegments 7 durch Klebung mit diesem verbinden. Alternativ könnte die Dämpfungsschicht 21 auch auf der Innenseite des ebenen Klappenteilsegment 7 angebracht sein. Die Dämpfungsschicht 21 besteht vorzugsweise aus einem Vlies- oder Filzmaterial. Je nach Erfordernis der Schalldämpfung kann ein beliebiger poröser Kunststoffschaum als Werkstoff für die Dämpfungsschicht 21 verwendet werden. Die gemäß Fig. 3 aufgebrachte Dämpfungsschicht 21 weist eine Dicke S₂ von 3mm auf.

Für beide Klappenteile 3 und 4 einschließlich der Lagerbuchsen 18 und des Stellhebels 20 ist eine gemeinsame Werkzeugform vorgesehen. Die Werkzeugform ist so ausgebildet, daß die beiden Klappenteile 3 und 4 in einer gemeinsamen Ebene unter gleichzeitiger Bildung des diese verbindenden Filmscharniers 13 gespritzt werden. Die Werkzeugform kann relativ einfach gehalten werden, da lediglich für das Auge in dem Stellhebel 20 und ggf. für die beiden Lagerbuchsen 18 zur spritzgußtechnischen Entformung notwendige Kerne oder ähnliches vorgesehen sein müssen. Die Klappe 1 ist somit in einem einstufigen Spritzgußvorgang mittels eines gemeinsamen Werkzeugs als einstückiges Spritzgußteil herstellbar. Je nach der Gestaltung der Werkzeugform sind unterschiedliche und an die jeweilige Anforderungen angepaßte Klappenformen erzielbar.

Nach einem dritten Ausführungsbeispiel gemäß **Fig. 4** weist die Klappe 1 zusätzlich randseitig angeordnete Dichtstege 22 und 23 auf. Im übrigen stimmt die Klappe gemäß Fig. 4 mit der Klappe 1 gemäß dem Ausführungsbeispiel nach Fig. 1 und Fig. 2 überein, so daß für die gleichen Teile die gleichen Bezugsziffern gewählt werden. Der Dichtsteg 22 ist als oberer Dichtsteg 22 einstückig mit dem oberen Klappenteil 3 verbunden, der Dichtsteg 23 ist als unterer Dichtsteg 23 einstückig mit dem unteren Klappenteil 4 verbunden. Die Dichtstege 22 und 23 sind jeweils umlaufend an dem oberen Klappenteil 3 bzw. dem unteren Klappenteil 4 angespritzt, wobei sie in der zusammengeklappten Position der Klappe 1 mit ihren Innenseiten flächig aneinanderliegen. Durch die beiden umlaufenden Dichtstege 22 und 23 wird in der zusammengeklappten Position der Klappe 1 ein umlaufender Rand geschaffen, auf den eine aus einem elastischen Werkstoff bestehende, nicht dargestellte Dichtlippe aufspritzbar ist. Um die angeformte Dichtlippe auf den durch die Dichtstege 22 und 23 gebildeten umlaufenden Rand sicher zu halten, sind in den beiden Dichtstegen 22 und 23 über ihren Umfang verteilt mehrere Aussparungen vorgesehen, die beim dargestellten Ausführungsbeispiel als die Dichtstege 22 und 23 durchsetzende Durchbrüche 24 ausgebildet sind. Das Material der Dichtlippe fließt beim Umspritzen der Dichtstege 22 und 23 in die Durchbrüche 24, wodurch die Dichtlippe formschlüssig an den Außenkonturen der Dichtstege 22 und 23 gehalten ist. Durch das Anspritzen der Dichtlippe wird in vorteilhafter Weise der für die Schallabsorption erforderliche Luftabschluß des Hohlkörpers 5 erreicht.

Auch die Dichtstege 22 und 23 werden in einer gemeinsamen Werkzeugform zusammen mit den übrigen Teilen der Klappe 1 in einem einstufigen Spritzgußvorgang einstückig an die Klappenteile 3 und 4 angeformt. Da durch die aufgespritzte Dichtlippe bereits ein Zusammenhalt der beiden Klappenteile 3 und 4 gewährleistet ist, ist es möglich, auf eine Rastverbindung im Innern der beiden Klappenteile zu verzichten. Bei diesem Ausführungsbeispiel dient die Dichtlippe als Fixierelement für die Klappe 1.

Die Erfindung ist nicht auf die kreisförmige Ausbildung der Öffnungen 6 beschränkt. Diese können auch ovalförmig oder schlitzförmig ausgebildet sein. Auch der Hohlkörper selbst kann in seiner Bauform den Anforderungen an eine bestimmte Luftführung angepaßt sein, so daß er beispielsweise zylinderförmig ausgebildet sein könnte.

## Patentansprüche

1. Klappe (1) für einen Luftführungskanal, insbesondere für eine Heizungs- und/oder Klimaanlage eines Kraftfahrzeugs, mit einem aus mindestens zwei Klappenteilen (3,4) zusammengefügten Klappenkörper, wobei der Klappenkörper als Hohlkörper (5) ausgebildet ist, **dadurch gekennzeichnet**, daß der Hohlkörper (5) an der Seite die, wenn die Klappe in einem Luftführungskanal montiert und im Betrieb ist, dem durch den Luftführungskanal geleiteten Luftstrom zugewand ist mindestens eine Öffnung (6) derart aufweist, daß der Hohlkörper (5) als Helmholtz-Resonator zur Schalldämpfung innerhalb des Luftführungskanals ausgebildet ist und daß dem die Öffnung (6) aufweisenden Klappenteil (3) innen- und/oder außenseitig anliegend mindestens im Bereich der Öffnung (6) eine Dämpfungsschicht (21) aus einem porösen Werkstoff zur Erhöhung des Strömungswiderstandes zugeordnet ist.

2. Klappe nach Anspruch 1, **dadurch gekennzeichnet**, daß der Hohlkörper (5) mindestens eine Trennwand (9) zur Bildung von voneinander luftdicht abgeschlossenen Kammern (10, 11, 12) aufweist, wobei den Kammern (10, 11, 12) jeweils mindestens eine Öffnung (6) des Klappenteils (3) zugeordnet ist.

3. Klappe nach Anspruch 1 oder 2, **dadurch gekennzeichnet**, daß der Hohlkörper (5) aus zwei schalenförmigen Klappenteilen (3, 4) gebildet ist, wobei der obere Klappenteil (3) aus einem mindestens eine Öffnung (6) aufweisenden ebenen Klappenteilsegment (7) und einem sich an diesen anschließenden gewölbten Klappenteilsegment (8) besteht.

4. Klappe nach Anspruch 3, **dadurch gekennzeichnet**, daß die Öffnung (6) des ebenen Klappenteilsegments (7) kreisförmig ausgebildet ist, wobei der Durchmesser (d) der Öffnung (6) kleiner als 6mm ist.

5. Klappe nach einem oder mehreren der Ansprüche 1 bis 4, **dadurch gekennzeichnet**, daß die Dämpfungsschicht (21) vollflächig auf der Außenseite des Klappenteils (3, ebenes Klappenteilsegment 7) anliegt.

6. Klappe nach einem oder mehreren der Ansprüche 1 bis 5, **dadurch gekennzeichnet**, daß die Dämpfungsschicht (21) aus einem porösen Kunststoffmaterial, einem Vlies- oder einem Filzstoff besteht.

7. Klappe nach einem oder mehreren der Ansprüche 1 bis 6, **dadurch gekennzeichnet**, daß die Dicke (S₂) der Dämpfungsschicht (21) kleiner oder gleich dem Durchmesser (d) der Öffnung (6) ist.

8. Klappe nach einem oder mehreren der Ansprüche 1 bis 7, **dadurch gekennzeichnet**, daß der Hohlkörper (5) aus einem formstabilen Kunststoffwerkstoff, insbesondere aus Polypropylen besteht.

9. Klappe nach einem oder mehreren der Ansprüche 1 bis 8, **dadurch gekennzeichnet**, daß die Klappenteile (3, 4) auf den Innenseiten jeweils zueinander korrespondierende Rippen aufweisen, die in der zusammengesetzten Position des Hohlkörpers (5) mit ihrem randseitigen freien Ende bündig aneinanderliegen zur Bildung der Trennwände (9).

10. Klappe nach einem oder mehreren der Ansprüche 1 bis 9, **dadurch gekennzeichnet**, daß mindestens eine Lagerbuchse (18) zur Lagerung des Hohlkörpers (5) einstückig an mindestens einem Klappenteil (3, 4) angespritzt ist.

11. Klappe nach einem oder mehreren der Ansprüche 1 bis 10, **dadurch gekennzeichnet**, daß an den beiden Klappenteilen (3, 4) in einem randseitigen Bereich nach außen ragende, umlaufende Dichtstege (22, 23) angeformt sind, die mit über den Umfang der Dichtstege (22, 23) verteilten Durchbrüchen (24) zum Anspritzen einer elastischen, umlaufenden Dichtlippe versehen sind.

12. Klappe nach einem oder mehreren der Ansprüche 1 bis 11, **dadurch gekennzeichnet**, daß der Hohlkörper (5) einstückig in einem einstufigen Spritzgußvorgang unter Bildung eines Filmscharniers (13) herstellbar ist, wobei die in der Werkzeugform gebildeten Klappenteile (3, 4) in einer gemeinsamen Ebene angeordnet sind.

## Claims

1. Cover (1) for an air conduit, particularly for a heating and/or air-conditioning unit of a vehicle, with a cover member which combines at least two cover sections (3,4), whereby the cover member is developed as a hollow body (5), **characterized in that** the hollow body (5), when the cover is mounted in an air conduit, and is in use, has at least one opening (6) on the side which faces the air-flow, which is directed by the air conduit, such that the hollow body (5) forms a Helmholz vibrator for sound insulation within the air conduit, and that the cover section (3), which has the opening (6), has associated with it, at least in the area of the opening (6), lying on its outer or its inner face, a porous damping layer, to increase resistance to air-flow.

2. Cover in accordance with claim 1, **characterized in that**, the hollow body (5) has at least one dividing partition (9) to form air-tight chambers (10, 11, 12) which are closed off from each other, whereby the chambers (1, 11, 12) each have at least one opening (6) of the cover section (3) associated with them.

3. Cover in accordance with claims 1 or 2, **characterized in that**, the hollow body (5) is formed by two basin-shaped cover sections (3, 4), whereby the upper cover section (3) comprises a flat cover-section area (7), having at least one opening (6), and an adjoining arched cover-section area (8).

4. Cover in accordance with claim 3, **characterized in that**, the opening (6) of the flat cover-section area (7) is circular, whereby the diameter (d) of the opening (6) is less than 6 mm in size.

5. Cover in accordance with one or several of claims 1 to 4, **characterized in that**, the damping layer (21) lies, over its whole extent, on the outer side of the cover section (3, cover-section area 7).

6. Cover in accordance with one or several of claims 1 to 5, **characterized in that**, the damping layer (21) is made of a porous plastic, fleece or felt material.

7. Cover in accordance with one or several of claims 1 to 6, **characterized in that**, the thickness (S2) of the damping layer (21) is less or equal to the diameter (d) of the opening (6).

8. Cover in accordance with one or several of claims 1 to 7, **characterized in that**, the hollow body (5) is made of non-deforming plastic, polypropylene in particular.

9. Cover in accordance with one or several of claims 1 to 8, **characterized in that**, the cover sections (3, 4) have ribs, which correspond to each other, on the inside, these ribs, in each case, in the assembled position of the hollow body (5), lying flush against each other with their free edges, to form the dividing partitions (9).

10. Cover in accordance with one or several of claims 1 to 9, **characterized in that**, at least the bearing bushing (18), for the mounting of the hollow body (5), is diecast, as a single piece, onto at least one cover section (3, 4).

11. Cover in accordance with one or several of claims 1 to 10, **characterized in that**, in the rim area, sealing webs (22, 23) are formed, projecting outwards, on both cover sections (3, 4), the said sealing webs (22, 23) being provided with perforations (24), which are distributed over their periphery, for the spraying-on of an elastic, surrounding sealing lip.

12. Cover in accordance with one or several of claims 1 to 11, **characterized in that**, the hollow body (5) can be produced as a single piece, in a single-stage injection die-casting process, with the forming of a thin-layer hinge element (13), whereby the cover sections (3, 4), formed in the cast, are arranged in a common plane.

## Revendications

1. Volet (1) pour un canal de guidage de l'air notamment pour une installation de chauffage et/ou de climatisation d'un véhicule automobile, comportant un corps de volet, formé par assemblage d'au moins trois parties (3, 4), le corps du volet étant agencé sous la forme d'un corps creux (5), caractérisé en ce que le corps creux (5) comporte au moins une ouverture (6) sur le côté qui, lorsque le volet est monté dans un canal de guidage de l'air et est en service, est tourné vers le courant d'air guidé par le canal de guidage de l'air, de telle sorte que le corps creux (5) est agencé sous la forme d'un résonateur de Helmholtz servant à réaliser une atténuation du bruit à l'intérieur du canal de guidage de l'air, et qu'une couche d'amortissement (21) formée d'un matériau poreux servant à accroître la résistance d'écoulement est associée, en étant appliquée côté intérieur et/ou côté extérieur, au moins dans une zone de l'ouverture (6) à la partie (3) du volet, qui comporte l'ouverture (6).

2. Volet selon la revendication 1, caractérisé en ce que le corps creux (5) comprend au moins une paroi de séparation (9) servant à former deux chambres (10, 11, 12) fermées d'une manière étanche à l'air les unes par rapport aux autres, au moins une ouverture (6) de la partie (3) du volet étant associée aux chambres (10, 11, 12).

3. Volet selon la revendication 1 ou 2, caractérisé en ce que le corps creux (5) est constitué de deux parties en forme de coques (3, 4), la partie supérieure (3) du volet étant constituée par un segment plat (7), qui comporte au moins une ouverture (6), et par un segment cintré (8), qui se raccorde au précédent.

4. Volet selon la revendication 3, caractérisé en ce que l'ouverture (6) du segment plat (7) de la partie du volet est agencée avec une forme circulaire, le diamètre (d) de l'ouverture (6) étant inférieur à 6 mm.

5. Volet selon une ou plusieurs des revendications 1 à 4, caractérisé en ce que la couche d'amortissement (21) s'applique par toute sa surface sur la face extérieure de la partie de volet (3, un segment plat 7 de la partie du volet).

6. Volet selon une ou plusieurs des revendications 1 à 5, caractérisé en ce que la couche d'amortissement (21) est formée d'une matière plastique poreuse, d'un matériau en nappe non tissé ou d'un matériau formant feutre.

7. Volet selon une ou plusieurs des revendications 1 à 6, caractérisé en ce que l'épaisseur (S₂) de la couche d'amortissement (21) est inférieure ou égale au diamètre (d) de l'ouverture (6).

8. Volet selon une ou plusieurs des revendications 1 à 7, caractérisé en ce que le corps creux (5) est réalisé en une matière plastique de forme stable, notamment en polypropylène.

9. Volet selon une ou plusieurs des revendications 1 à 8, caractérisé en ce que les parties (3, 4) du volet possèdent, sur les faces intérieures, des nervures respectives qui se correspondent et qui, lorsque le corps creux (5) est à l'état assemblé, s'appliquent de niveau par leurs extrémités libres situées au niveau des bords, pour former les parois de séparation (9).

10. Volet selon une ou plusieurs des revendications 1 à 9, caractérisé en ce qu'au moins une douille de palier (18) servant à supporter le corps creux (5) est formée par moulage par injection d'un seul tenant sur au moins une partie (3, 4) du volet.

11. Volet selon une ou plusieurs des revendications 1 à 10, caractérisé en ce que sur les deux parties (3, 4) du volet sont formées, dans une partie située du côté du bord, des barrettes d'étanchéité périphériques (22, 23) qui font saillie vers l'extérieur et qui sont pourvues de passages (24) qui sont répartis sur la périphérie des barrettes d'étanchéité (22, 23) et servent à former par moulage par injection une lèvre d'étanchéité élastique périphérique.

12. Volet selon une ou plusieurs des revendications 1 à 11, caractérisé en ce que le corps creux (5) peut être fabriqué d'un seul tenant lors d'une opération unique de moulage par injection moyennant la formation d'une charnière formée d'un film (13), les parties (3, 4) du volet, qui sont formées dans le moule de l'outil, étant disposées dans un plan commun.
